# EUROPEAN PATENT APPLICATION

(11) **EP 4 407 474 A1**
(43) Date of publication of application: **31.07.2024**
(21) Application number: 24153962.6
(22) Date of filing: 25.01.2024
(51) Int. Cl.: G06F 16/16

(54) **MANAGEMENT OF NETWORK FILE COPY OPERATIONS TO A NEW DATA STORE**

(30) Priority: 27.01.2023 US 202318160770
(71) Applicant: VMware LLC, Palo Alto, CA 94304 (US)
(72) Inventor: Ramanathan, Arunachalam, Palo Alto, 94304 (US); Tarasuk-Levin, Gabriel, Palo Alto, 94304 (US)
(74) Representative: Dilg, Haeusler, Schindelmann Patentanwaltsgesellschaft mbH

(57) **Abstract**

A method of managing a network file copy (NFC) operation, includes the steps of: transmitting a request to execute a first NFC operation on at least a first data store, wherein the first NFC operation comprises creating a full copy of a file that is stored in the first data store; after transmitting the request to execute the first NFC operation, determining that the first NFC operation should be stopped; and based on determining that the first NFC operation should be stopped: transmitting a request to stop the first NFC operation, selecting a second data store, and transmitting a request to execute a second NFC operation on at least the second data store, wherein the second NFC operation comprises creating a copy of at least a portion of the file.

## Description

### Background

Network file copy (NFC) operations are used to copy files, including large files that are sometimes transferred from one storage device to another. For example, a data store may store a virtual disk of a virtual machine (VM). Through a clone operation, a host server makes a copy of the virtual disk and stores the copy in the data store. Through a relocation operation, one or more host servers move the virtual disk from the original (source) data store to another (destination) data store.

In a cloud computing environment, there is often a separation between a virtual infrastructure (VI) administrator and a cloud administrator. The VI administrator performs regular maintenance of hardware infrastructure such as performing security-related upgrades of data stores. The cloud administrator performs NFC operations using that same hardware infrastructure. These NFC operations often take a long time to execute, e.g., multiple days to relocate a multi-terabyte virtual disk between data stores in different software-defined data centers (SDDCs). Accordingly, tasks triggered by the two administrators often conflict with each other.

For example, the cloud administrator may trigger an NFC operation that will take several hours to complete. A few hours into the NFC operation, the VI administrator may wish to perform maintenance on a data store that is involved in the ongoing NFC operation. Accordingly, the data store is blocked from entering maintenance mode. It is undesirable for the VI administrator to merely wait for the NFC operation to complete because that may take several hours, which disrupts the data store's maintenance schedule. It is also undesirable for the VI administrator to "kill" the NFC operation, which disrupts the cloud administrator's workflow and results in a loss of the work that has already been performed by the ongoing NFC operation. A solution to such conflicts, which are increasingly happening in the cloud, is needed.

### Summary

Accordingly, one or more embodiments provide a method of managing an NFC operation. The method includes the steps of: transmitting a request to execute a first NFC operation on at least a first data store, wherein the first NFC operation comprises creating a full copy of a file that is stored in the first data store; after transmitting the request to execute the first NFC operation, determining that the first NFC operation should be stopped; and based on determining that the first NFC operation should be stopped: transmitting a request to stop the first NFC operation, selecting a second data store, and transmitting a request to execute a second NFC operation on at least the second data store, wherein the second NFC operation comprises creating a copy of at least a portion of the file.

Further embodiments include a non-transitory computer-readable storage medium comprising instructions that cause a computer system to carry out the above method, as well as a computer system configured to carry out the above method.

### Brief Description of the Drawings

Figure 1 is a block diagram of a hybrid cloud computer system in which embodiments may be implemented.
Figures 2A-2C are a sequence of block diagrams illustrating the managing of a clone operation, according to an embodiment.
Figure 3 is a flow diagram of a method performed by a virtualization manager and a host server to manage a clone operation, according to an embodiment.
Figures 4A-4C are a sequence of block diagrams illustrating the managing of a relocation operation by switching source data stores, according to an embodiment.
Figure 5 is a flow diagram of a method performed by a virtualization manager and a host server to manage a relocation operation by switching source data stores, according to an embodiment.
Figures 6A-6B are a sequence of block diagrams illustrating the managing of a relocation operation by switching destination data stores, according to an embodiment.
Figure 7 is a flow diagram of a method performed by a virtualization manager and a host server to manage a relocation operation by switching destination data stores, according to an embodiment.

### Detailed Description

Techniques for managing an NFC operation are described. Such techniques minimize the disruption to the NFC operation while making a data store available to enter maintenance mode. Such techniques are primarily discussed with respect to three use cases: (1) managing an in-place clone operation, i.e., a clone operation in which the source and destination data stores are the same, (2) managing a relocation operation by switching source data stores, and (3) managing a relocation operation by switching destination data stores. Each of these use cases involves starting an NFC operation involving one or more data stores, determining to stop the NFC operation, e.g., to free up a data store to enter maintenance mode, and selecting a new data store. Then, a second NFC operation is started in place of the first NFC operation, the second NFC operation involving the new data store. It should be noted that as with relocation operations, clone operations may have different source and destination data stores as well, and the source and destination data stores may also be switched. However, unlike relocation operations, the original file is preserved after completing a clone operation.

In the case of managing an in-place clone operation, the first NFC operation involves copying a file and storing the full copy in an original data store. The second NFC operation involves copying at least a portion of the file and storing the copied portion in the new data store. In the case of managing a relocation operation, the first NFC operation involves relocating a file from an original source data store to an original destination data store. The second NFC operation involves relocating at least a portion of the file from: (1) a new source data store to the original destination data store, or (2) the original source data store to a new destination data store. In each use case, the second NFC operation either restarts the first NFC operation or resumes from where the first NFC operation left off (thus saving work). Whether the second NFC operation is able to conserve the work of the first NFC operation depends on the use case and on other circumstances surrounding the first and second NFC operations. These and further aspects of the invention are discussed below with respect to the drawings.

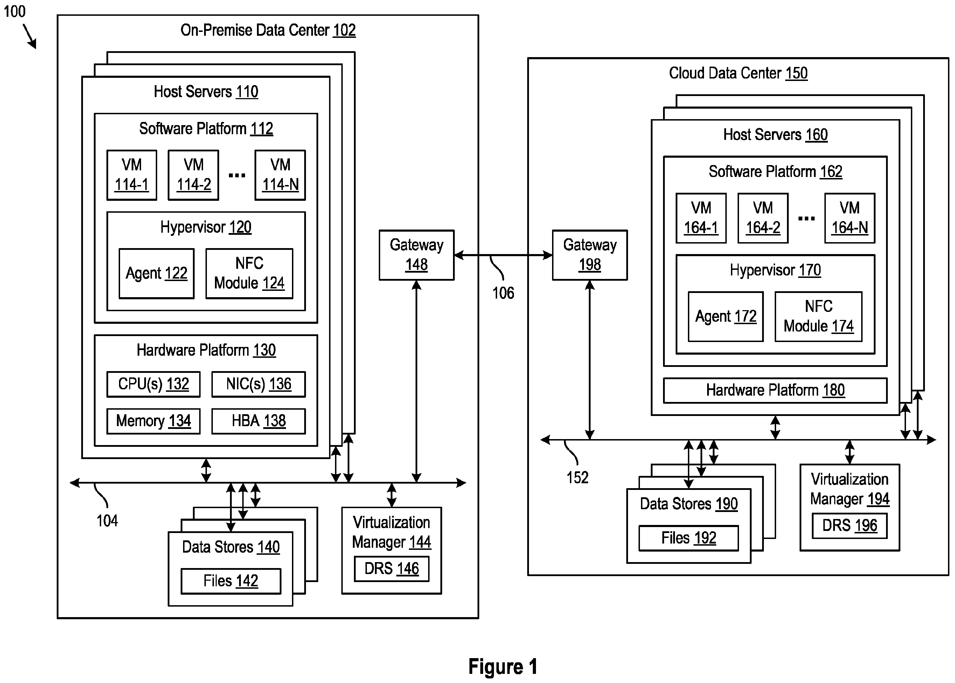

Figure 1 is a block diagram of a hybrid cloud computer system 100 in which embodiments of the present invention may be implemented. Hybrid cloud computer system 100 includes an on-premise data center 102 and a cloud data center 150. On-premise data center 102 is controlled and administrated by a particular enterprise or business organization. Cloud data center 150 is operated by a cloud computing service provider to expose a public cloud service to various account holders. Embodiments are also applicable to other computer systems including those involving multiple data centers that controlled by the same enterprise or organization, and those involving multiple cloud data centers.

On-premise data center 102 includes host servers 110 that are each constructed on a server-grade hardware platform 130 such as an x86 architecture platform. Hardware platform 130 includes conventional components of a computing device, such as one or more central processing units (CPUs) 132, system memory 134 such as random-access memory (RAM), local storage (not shown) such as one or more magnetic drives or solid-state drives (SSDs), one or more network interface cards (NICs) 136, and a host bus adapter (HBA) 138.

CPU(s) 132 are configured to execute instructions such as executable instructions that perform one or more operations described herein, which may be stored in system memory 134. NIC(s) 136 enable host server 110 to communicate with other devices over a physical network 104 such as a local area network (LAN). HBA 138 couples host server 110 to data stores 140 over physical network 104. Data stores 140 are storage arrays of a network data storage system such as a storage area network (SAN) or network-attached storage (NAS). Data stores 140 store files 142 such as virtual disks of VMs.

Host server 110 includes a software platform 112. Software platform 112 includes a hypervisor 120, which is a virtualization software layer. Hypervisor 120 supports a VM execution space within which VMs 114 are concurrently instantiated and executed. One example of hypervisor 120 is a VMware ESX^{®} hypervisor, available from VMware, Inc. Hypervisor 120 includes an agent 122 and an NFC module 124. Agent 122 connects host server 110 to a virtualization manager 144. NFC module 124 executes NFC operations involving data stores 140. Although the disclosure is described with reference to VMs, the teachings herein also apply to nonvirtualized applications and to other types of virtual computing instances such as containers, Docker^{®} containers, data compute nodes, and isolated user space instances for which data is transferred pursuant to network copy mechanisms.

Virtualization manager 144 communicates with host servers 110 via a management network (not shown) provisioned from network 104. Virtualization manager 144 performs administrative tasks such as managing host servers 110, provisioning and managing VMs 114, migrating VMs 114 from one of host servers 110 to another, and load balancing between host servers 110. Virtualization manager 144 may be, e.g., a physical server or one of VMs 114. One example of virtualization manager 144 is VMware vCenter Server,^{®} available from VMware, Inc.

Virtualization manager 144 includes a distributed resource scheduler (DRS) 146 for performing administrative tasks. For example, DRS 146 may include a flag (not shown) for each of data stores 140, the flag indicating whether data store 140 is scheduled to enter maintenance mode soon. Such information is helpful for managing NFC operations. If one of data stores 140 is scheduled to enter maintenance mode soon, then that one of data stores 140 is not a good candidate for performing a new NFC operation with. As another example, DRS 146 may include another flag (not shown) for each of data stores 140, the other flag indicating whether data store 140 was upgraded recently. If one of data stores 140 was recently upgraded, then that one of data stores 140 is a good candidate for performing a new NFC operation with.

On-premise data center 102 includes a gateway 148. Gateway 148 provides VMs 114 and other devices in on-premise data center 102 with connectivity to an external network 106 such as the Internet. Gateway 148 manages public internet protocol (IP) addresses for VMs 114 and routes traffic incoming to and outgoing from on-premise data center 102. Gateway 148 may be, e.g., a physical networking device or one of VMs 114.

Cloud data center 150 includes host servers 160 that are each constructed on a server-grade hardware platform 180 such as an x86 architecture platform. Like hardware platform 130, hardware platform 180 includes conventional components of a computing device (not shown) such as one or more CPUs, system memory, optional local storage, one or more NICs, and an HBA. The CPU(s) are configured to execute instructions such as executable instructions that perform one or more operations described herein, which may be stored in the system memory. The NIC(s) enable host server 160 to communicate with other devices over a physical network 152 such as a LAN. The HBA couples host server 160 to data stores 190 over physical network 152. Like data stores 140, data stores 190 are storage arrays of a network data storage system, and data stores 190 store files 192 such as virtual disks of VMs.

Like host servers 110, each of host servers 160 includes a software platform 162 on which a hypervisor 170 abstracts hardware resources of hardware platform 180 for concurrently running VMs 164. Hypervisor 170 includes an agent 172 and an NFC module 174. Agent 172 connects host server 160 to a virtualization manager 194. NFC module 174 executes NFC operations involving data stores 190.

Virtualization manager 194 communicates with host servers 160 via a management network (not shown) provisioned from network 152. Virtualization manager 194 performs administrative tasks such as managing host servers 160, provisioning and managing VMs 164, migrating VMs 164 from one of host servers 160 to another, and load balancing between host servers 160. Virtualization manager 194 may be, e.g., a physical server or one of VMs 164. Virtualization manager 194 includes a DRS 196 for performing administrative tasks. For example, DRS 196 may include a flag (not shown) for each of data stores 190, the flag indicating whether data store 190 is scheduled to enter maintenance mode soon. As another example, DRS 196 may include another flag (not shown) for each of data stores 190, the other flag indicating whether data store 190 was upgraded recently.

Cloud data center 150 includes a gateway 198. Gateway 198 provides VMs 164 and other devices in cloud data center 150 with connectivity to external network 106. Gateway 198 manages public IP addresses for VMs 164 and routes traffic incoming to and outgoing from cloud data center 150. Gateway 198 may be, e.g., a physical networking device or one of VMs 164.

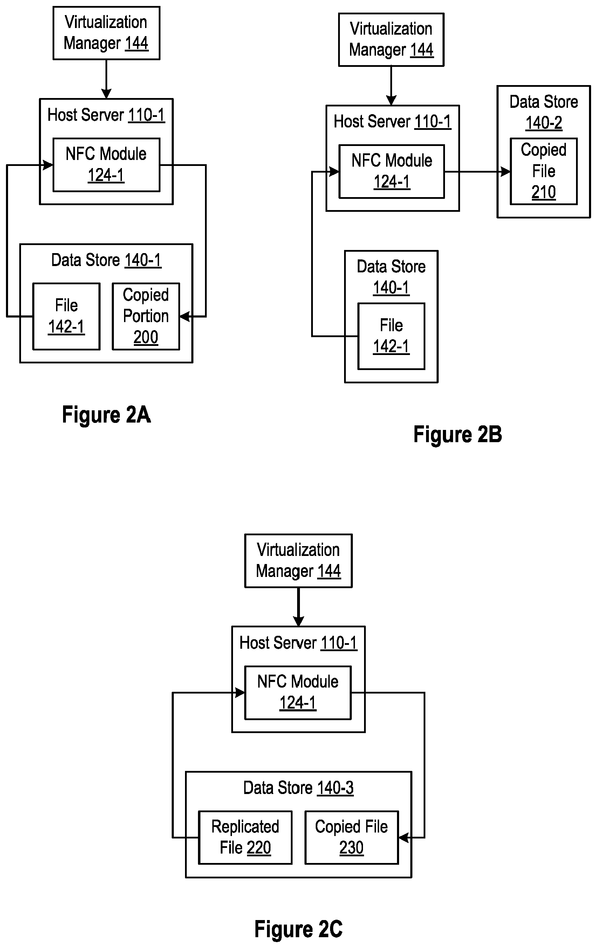

Figures 2A-2C are a sequence of block diagrams illustrating the managing of an in-place clone operation, according to an embodiment. Figure 2A illustrates virtualization manager 144 instructing a host server 110-1 to execute a first (in-place) clone operation on a file 142-1 of a data store 140-1. Accordingly, an NFC module 124-1 begins making a full copy of file 142-1 to store in data store 140-1. The portion of file 142-1 that has been copied thus far is illustrated as a copied portion 200.

Figure 2B illustrates virtualization manager 144 instructing host server 110-1 to stop executing the first clone operation and to execute a second clone operation. For example, a VI administrator may have requested to place data store 140-1 into maintenance mode. Like the first clone operation, the second clone operation involves copying file 142-1. However, instead of storing the copy in data store 140-1, the second clone operation involves storing the copy in a data store 140-2. The full copy of file 142-1 is illustrated as copied file 210. It should be noted that the work performed by the first clone operation is not conserved, i.e., the work involved in creating copied portion 200 is not leveraged when creating copied file 210.

Although Figure 2B illustrates host server 110-1 accessing data store 140-2, host server 110-1 may not have access to data store 140-2. In such a case, to manage the first clone operation, another of host servers 110 (not shown) is utilized. Host server 110-1 transmits copied file 210 to the other of host servers 110, and the other of host servers 110 stores copied file 210 in data store 140-2.

Figure 2C is an alternative use case to that illustrated by Figure 2B. In the use case illustrated by Figure 2C, data store 140-1 replicates files stored therein to another data store 140-3. Accordingly, a replicated copy of file 142-1 is already stored in data store 140-3 as replicated file 220. Virtualization manager 144 instructs host server 110-1 to stop executing the first clone operation and to execute a second (in-place) clone operation. The second clone operation involves copying replicated file 220 and storing the copy in data store 140-3 as copied file 230. Accordingly, data store 140-1 may enter maintenance mode as NFC module 124-1 performs the second clone operation.

It should be noted that if copied portion 200 is replicated to data store 140-3, NFC module 124-1 begins the second clone operation at an offset of replicated file 220 at which the first clone operation left off, which conserves the work of the first clone operation. On the other hand, if copied portion 200 is not replicated, NFC module 124-1 starts from the beginning. Although Figure 2C illustrates host server 110-1 accessing data store 140-3, host server 110-1 may not have access to data store 140-3. In such a case, to manage the first clone operation, another of host servers 110 (not shown) performs the second clone operation.

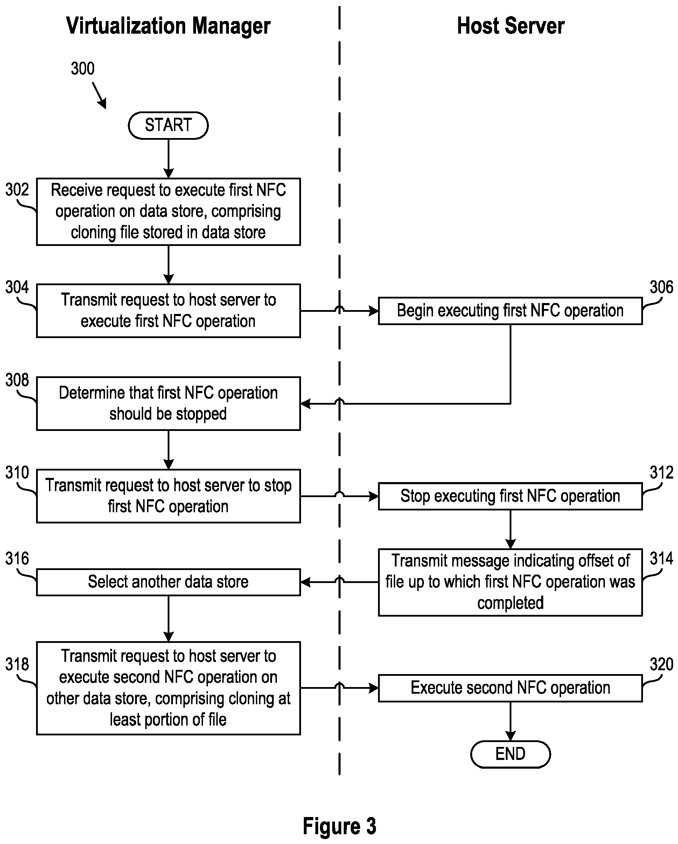

Figure 3 is a flow diagram of a method 300 performed by a virtualization manager and a host server to manage an in-place clone operation, according to an embodiment. Method 300 will be discussed with reference to virtualization manager 144 and one of host servers 110. However, method 300 may also be performed by virtualization manager 194 and one of host servers 160. At step 302, virtualization manager 144 receives a request from the cloud administrator to execute a first NFC operation on one of data stores 140 (original). The first NFC operation comprises cloning one of files 142, i.e., creating a full copy of file 142 and storing the full copy in the original data store.

At step 304, virtualization manager 144 transmits a request to host server 110 to execute the first NFC operation. At step 306, host server 110 begins executing the first NFC operation. At step 308, virtualization manager 144 determines that the first NFC operation should be stopped. For example, the VI administrator may have instructed virtualization manager 144 to place the original data store into maintenance mode. At step 310, virtualization manager 144 transmits a request to host server 110 to stop executing the first NFC operation.

At step 312, host server 110 stops executing the first NFC operation. After step 312, host server 110 has copied a portion of file 142 and stored the portion in the original data store. At step 314, host server 110 transmits a message to virtualization manager 144. The message indicates an offset of file 142 up to which the first NFC operation was completed, i.e., up to which a copy of file 142 has been created and stored in the original data store. At step 316, virtualization manager 144 selects another (new) data store. For example, the selected data store may be a data store that is not scheduled to enter maintenance mode soon or that was recently upgraded, as indicated by DRS 146.

At step 318, virtualization manager 144 transmits a request to host server 110 to execute a second NFC operation on the new data store. The second NFC operation comprises cloning at least a portion of file 142 to store in the new data store. Executing the second NFC operation may comprise copying file 142 from the original data store. However, if a replicated copy of file 142 is stored in the new data store, executing the second NFC operation instead comprises copying from the replicated copy so that the original data store may enter maintenance mode more quickly. Furthermore, executing the second NFC operation may comprise making a full copy of file 142. However, if the new data store includes a replicated copy of the portion of file 142 for which the first NFC operation was completed, executing the second NFC operation instead only comprises copying the remainder of file 142. The remainder of file 142 begins at the offset and includes the portion of file 142 for which the first NFC operation was not completed.

At step 320, host server 110 executes the second NFC operation, including storing a clone in the new data store. After step 320, method 300 ends. Although method 300 is discussed with respect to a single one of host servers 110, method 300 may involve a plurality of host servers 110. One of host servers 110 may access the original data store, while another one of host servers 110 accesses the new data store.

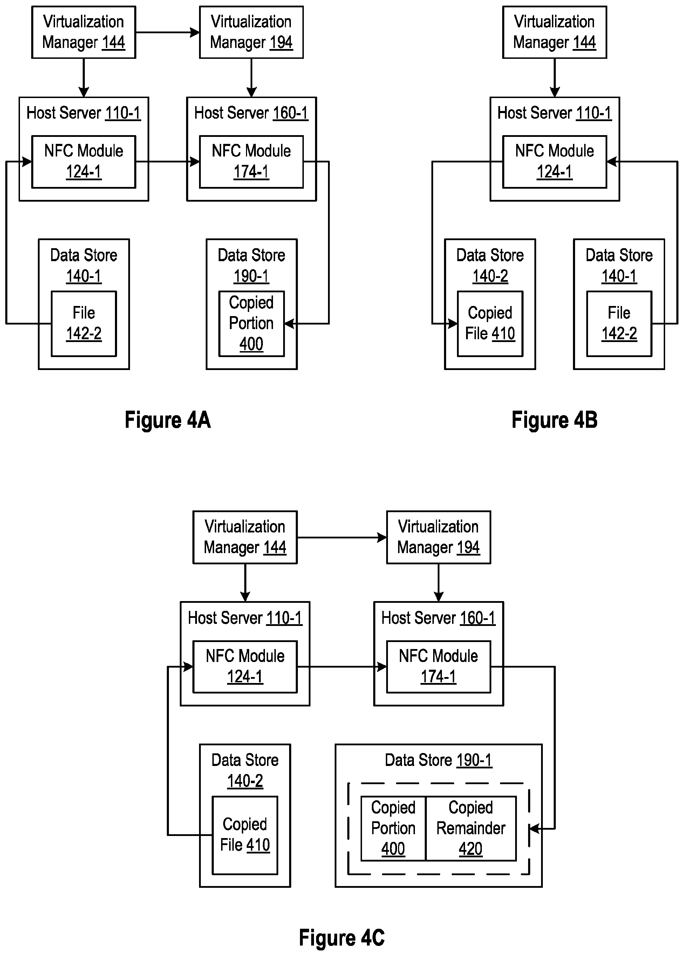

Figures 4A-4C are a sequence of block diagrams illustrating the managing of a relocation operation by switching source data stores, according to an embodiment. Figure 4A illustrates virtualization manager 144 instructing host server 110-1 and virtualization manager 194 to execute a first relocation operation on a file 142-2 from data store 140-1 (source) to a data store 190-1 (destination). Virtualization manager 194 then forwards the instruction to a host server 160-1. The source data store is connected to host server 110-1, and the destination data store is connected to host server 160-1.

Host servers 110-1 and 160-1 then begin relocating file 142-2. Specifically, NFC module 124-1 begins making a full copy of file 142-2. The portion of file 142-2 that has been copied thus far is illustrated as a copied portion 400. NFC module 124-1 transmits copied portion 400 to NFC module 174-1, and NFC module 174-1 stores copied portion 400 in data store 190-1.

Although Figure 4A illustrates a relocation operation between data stores in different data centers, the source and destination data stores may also be in the same data center. Accordingly, a single virtualization manager may instruct both host servers to execute the first relocation operation. Furthermore, although Figure 4A illustrates a relocation operation that involves two host servers, the source and destination data stores may be connected to a single host server. Accordingly, the single virtualization manager may instruct a single host server to perform the first relocation operation by itself.

Figure 4B illustrates virtualization manager 144 instructing host server 110-1 to stop executing the first relocation operation and to execute a second relocation operation. For example, the VI administrator may have requested to place data store 140-1 (original source) into maintenance mode. Accordingly, virtualization manager 144 selected a data store 140-2 as a new source data store. However, file 142-2 must first be relocated from data store 140-1 to data store 140-2 to then be relocated to data store 190-1. The second relocation operation thus involves relocating file 142-2 from data store 140-1 to data store 140-2. Specifically, NFC module 124-1 copies file 142-2 and stores the copy in data store 140-2 as copied file 410. Data store 140-2 may then be used as the new source data store for relocating copied file 410 to data store 190-1, and data store 140-1 may enter maintenance mode.

It should be noted that data stores 140-1 and 140-2 are connected to the same network 104, which may be a LAN. Accordingly, relocating file 142-2 from data store 140-1 to data store 140-2 may be substantially faster than relocating file 142-2 to data store 190-1, which may be across the Internet. Relocating file 142-2 to data store 140-2 may thus allow data store 140-1 to enter maintenance mode considerably sooner than if the first NFC operation was carried out to completion. It should also be noted that if data store 140-1 already replicated file 142-2 to data store 140-2, the second relocation operation is not necessary. Data store 140-2 would already store a replicated copy of file 142-2 for relocating to data store 190-1.

Figure 4C illustrates virtualization manager 144 instructing host server 110-1 and virtualization manager 194 to execute a third relocation operation on copied file 410 from data store 140-2 (new source) to data store 190-1 (destination). Virtualization manager 194 then forwards the instruction to host server 160-1. The new source data store is connected to host server 110-1, and the destination data store is connected to host server 160-1. Host servers 110-1 and 160-1 then begin relocating copied file 410.

Specifically, NFC module 124-1 copies the remainder of copied file 410 and transmits the remainder to NFC module 174-1. NFC module 174-1 stores the remainder in data store 190-1 as copied remainder 420. Copied portion 400 along with copied remainder 420 form a full copy of file 142-2. It should thus be noted that all the work from the first relocation operation of Figure 4A is conserved.

Although Figure 4C illustrates a relocation operation between data stores in different data centers, the new source and destination data stores may also be in the same data center. Accordingly, a single virtualization manager may instruct both host servers to execute the third relocation operation. Furthermore, although Figure 4C illustrates a relocation operation that involves two host servers, the new source and destination data stores may be connected to a single host server. Accordingly, the single virtualization manager may instruct a single host server to perform the third relocation operation by itself.

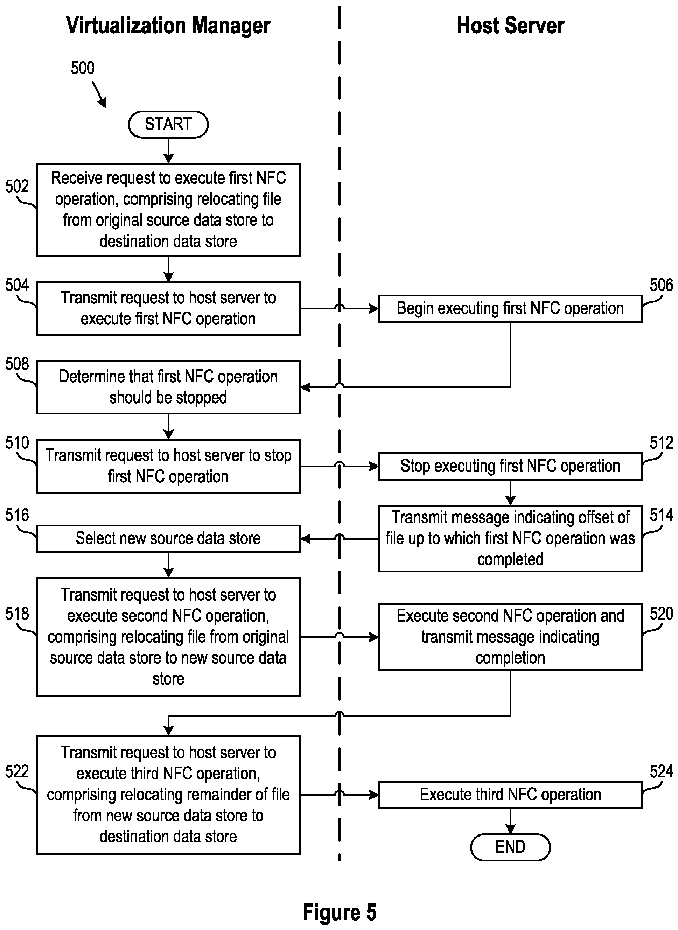

Figure 5 is a flow diagram of a method 500 performed by a virtualization manager and a host server to manage a relocation operation by switching source data stores, according to an embodiment. Method 500 will be discussed with reference to virtualization manager 144 and one of host servers 110. However, method 500 may also be performed by virtualization manager 194 and one of host servers 160. At step 502, virtualization manager 144 receives a request from the cloud administrator to execute a first NFC operation. The first NFC operation comprises relocating one of files 142 from one of data stores 140 (original source) to another one of data stores 140 (destination), i.e., creating a full copy of file 142, storing the full copy in the destination data store, and deleting file 142 from the original source data store.

At step 504, virtualization manager 144 transmits a request to host server 110 to execute the first NFC operation. At step 506, host server 110 begins executing the first NFC operation. At step 508, virtualization manager 144 determines that the first NFC operation should be stopped. For example, the VI administrator may have instructed virtualization manager 144 to place the original source data store into maintenance mode. At step 510, virtualization manager 144 transmits a request to host server 110 to stop executing the first NFC operation.

At step 512, host server 110 stops executing the first NFC operation. After step 512, host server 110 has copied a portion of file 142 from the original source data store and stored the portion in the destination data store. At step 514, host server 110 transmits a message to virtualization manager 144. The message indicates an offset of file 142 up to which the first NFC operation was completed, i.e., up to which a copy of file 142 has been created and stored in the destination data store. At step 516, virtualization manager 144 selects a new source data store. For example, the selected data store may be a data store that is not scheduled to enter maintenance mode soon or that was recently upgraded, as indicated by DRS 146.

At step 518, virtualization manager 144 transmits a request to host server 110 to execute a second NFC operation. The second NFC operation comprises relocating file 142 from the original source data store to the new source data store, i.e., creating a full copy of file 142, storing the full copy in the new source data store, and deleting file 142 from the original source data store. At step 520, host server 110 executes the second NFC operation, including storing a copy of file 142 in the new source data store. Host server 110 also transmits a message to virtualization manager 144 indicating that the second NFC operation is complete.

After step 520, the original source data store may enter maintenance mode. At step 522, virtualization manager 144 transmits a request to host server 110 to execute a third NFC operation. The third NFC operation comprises relocating the remainder of file 142 from the new source data store to the destination data store. The remainder of file 142 begins at the offset and includes the portion of file 142 for which the first NFC operation was not completed. At step 524, host server 110 executes the third NFC operation, including storing the remainder of file 142 in the destination data store. After step 524, method 500 ends.

Although method 500 is discussed with respect to a single one of host servers 110, method 500 may also be performed with a plurality of host severs 110. One of host servers 110 may access the original and new source data stores, and another one of host servers 110 may access the destination data store. Additionally, method 500 may be performed across data centers, e.g., if the original and new source data stores are in on-premise data center 102 and the destination data store is in cloud data center 150. Additionally, the original source data store may replicate files therein to the new source data store. In such a case, step 516 moves directly to step 522 because the new source data store already stores a replicated copy of file 142.

Finally, as mentioned earlier, clone operations may have different source and destination data stores. As with relocation operations, the source data stores may be switched. In the case of relocation operations, the original file is not preserved after the third NFC operation is completed. In the case of clone operations, the original file is preserved after the third NFC operation is completed.

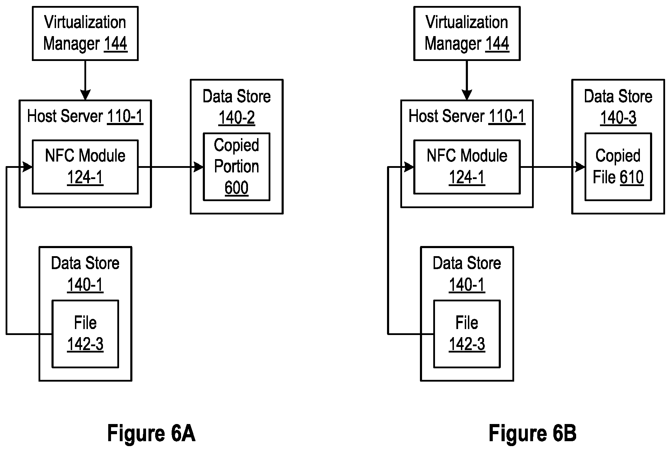

Figures 6A-6B are a sequence of block diagrams illustrating the managing of a relocation operation by switching destination data stores, according to an embodiment. Figure 6A illustrates virtualization manager 144 instructing host server 110-1 to execute a first relocation operation on a file 142-3 from data store 140-1 (source) to data store 140-2 (destination). The source and destination data stores are both connected to host server 110-1. Host server 110-1 then begins relocating file 142-3. Specifically, NFC module 124-1 begins making a full copy of file 142-3. The portion of file 142-3 that has been copied thus far is illustrated as a copied portion 600. NFC module 124-1 stores copied portion 600 in data store 140-2.

Although Figure 6A illustrates a relocation operation that involves a single host server, the source and destination data stores may not be connected to a single host server. Accordingly, virtualization manager 144 may instruct multiple host servers to work together to perform the first relocation operation. Furthermore, although Figure 6A illustrates a relocation operation within a single data center, the source and destination data stores may also be in separate data centers. Accordingly, virtualization manager 144 may instruct virtualization manager 194 to execute the first relocation operation, and the first relocation operation may be carried out by host server 110-1 and one of host servers 160.

Figure 6B illustrates virtualization manager 144 instructing host server 110-1 to stop executing the first relocation operation and to execute a second relocation operation. For example, the VI administrator may have requested to place data store 140-2 (original destination) into maintenance mode. Accordingly, virtualization manager 144 selected data store 140-3 as a new destination data store. Once host server 110-1 stops executing the first relocation operation, data store 140-2 may enter maintenance mode. The second relocation operation involves relocating file 142-3 from data store 140-1 (source) to data store 140-3 (new destination).

Specifically, NFC module 124-1 copies file 142-3 and stores the copy in data store 140-3 as copied file 610. It should be noted that the work from the first relocation operation of Figure 6A is not conserved. However, as an alternative, virtualization manager 144 may instruct host server 110-1 to relocate copied portion 600 from data store 140-2 to 140-3. Then, virtualization manager 144 may instruct host server 110-1 to relocate the remainder of file 142-3 to data store 140-3 to conserve the work of the first relocation operation. Such an approach may be advantageous, e.g., if the network speed between the original and new destination data stores is relatively fast.

Although Figure 6B illustrates a relocation operation that involves a single host server, the source and new destination data stores may not be connected to a single host server. Accordingly, virtualization manager 144 may instruct multiple host servers to work together to perform the second relocation operation. Furthermore, although Figure 6B illustrates a relocation operation within a single data center, the source and new destination data stores may also be in separate data centers. Accordingly, virtualization manager 144 may instruct virtualization manager 194 to execute the second relocation operation, and the second relocation operation may be carried out by host server 110-1 and one of host servers 160.

As an alternative use case to that illustrated by Figures 6A and 6B, data store 140-2 may replicate files stored therein to data store 140-3. Accordingly, when host server 110-1 stops executing the first relocation operation, copied portion 600 may already be replicated to data store 140-3. Then, virtualization manager 144 may instruct host server 110-1 to relocate the remainder of file 142-3 to data store 140-3 to conserve the work of the first relocation operation.

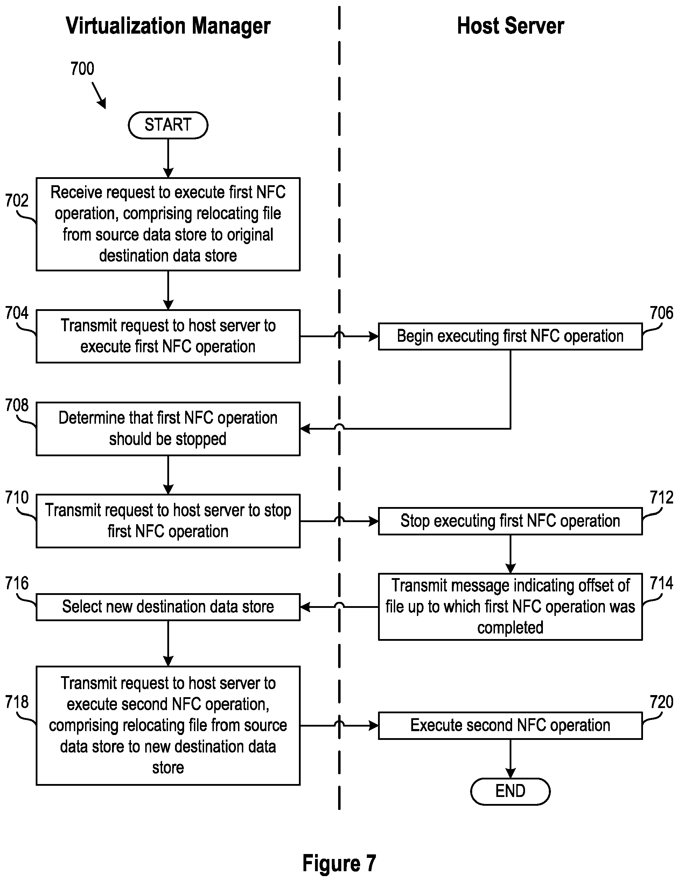

Figure 7 is a flow diagram of a method 700 performed by a virtualization manager and a host server to manage a relocation operation by switching destination data stores, according to an embodiment. Method 700 will be discussed with reference to virtualization manager 144 and one of host servers 110. However, method 700 may also be performed by virtualization manager 194 and one of host servers 160. At step 702, virtualization manager 144 receives a request from the cloud administrator to execute a first NFC operation. The first NFC operation comprises relocating one of files 142 from one of data stores 140 (source) to another one of data stores 140 (original destination), i.e., creating a full copy of file 142, storing the full copy in the original destination data store, and deleting file 142 from the source data store.

At step 704, virtualization manager 144 transmits a request to host server 110 to execute the first NFC operation. At step 706, host server 110 begins executing the first NFC operation. At step 708, virtualization manager 144 determines that the first NFC operation should be stopped. For example, the VI administrator may have instructed virtualization manager 144 to place the original destination data store into maintenance mode.

At step 710, virtualization manager 144 transmits a request to host server 110 to stop executing the first NFC operation. At step 712, host server 110 stops executing the first NFC operation. After step 712, host server 110 has copied a portion of file 142 from the source data store and stored the portion in the original destination data store. At step 714, host server 110 transmits a message to virtualization manager 144. The message indicates an offset of file 142 up to which the first NFC operation was completed, i.e., up to which a copy of file 142 has been created and stored in the original destination data store.

At step 716, virtualization manager 144 selects a new destination data store. For example, the selected data store may be a data store that is not scheduled to enter maintenance mode soon or that was recently upgraded, as indicated by DRS 146. At step 718, virtualization manager 144 transmits a request to host server 110 to execute a second NFC operation. The second NFC operation comprises relocating file 142 from the source data store to the new destination data store.

It should be noted that as an alternative, the portion of file 142 that was relocated to the original destination data store may first be relocated from the original destination data store to the new destination data store. Then, only the remainder of file 142 is relocated from the source data store to the new destination data store. The remainder of file 142 begins at the offset and includes the portion of file 142 for which the first NFC operation was not completed. Furthermore, if the original destination data store already replicated the portion of file 142 to the new destination data store, then the second NFC operation may begin at the offset without the additional relocation operation. At step 720, host server 110 executes the second NFC operation, including storing file 142 (or merely the remainder thereof) in the new destination data store. After step 720, method 700 ends.

Although method 700 is discussed with respect to a single one of host servers 110, method 700 may also be performed with a plurality of host severs 110. One of host servers 110 may access the source data store, and another one of host servers 110 may access the original and new destination data stores. Additionally, method 700 may be performed across data centers, e.g., if the source data store is in on-premise data center 102, and the original and new destination data stores are in cloud data center 150.

Finally, as mentioned earlier, clone operations may have different source and destination data stores. As with relocation operations, the destination data stores may be switched. In the case of relocation operations, the original file is not preserved after the second NFC operation is completed. In the case of clone operations, the original file is preserved after the second NFC operation is completed.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

One or more embodiments of the invention also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations. The embodiments described herein may also be practiced with computer system configurations including hand-held devices, microprocessor systems, microprocessor-based or programmable consumer electronics, minicomputers, mainframe computers, etc.

One or more embodiments of the present invention may be implemented as one or more computer programs or as one or more computer program modules embodied in computer-readable media. The term computer-readable medium refers to any data storage device that can store data that can thereafter be input into a computer system. Computer-readable media may be based on any existing or subsequently developed technology that embodies computer programs in a manner that enables a computer to read the programs. Examples of computer-readable media are hard disk drives (HDDs), SSDs, network-attached storage (NAS) systems, read-only memory (ROM), RAM, compact disks (CDs), digital versatile disks (DVDs), magnetic tapes, and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host server, console, or guest operating system (OS) that perform virtualization functions.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined component. Similarly, structures and functionalities presented as a single component may be implemented as separate components. These and other variations, additions, and improvements may fall within the scope of the appended claims.

## Claims

1. A method of managing a network file copy (NFC) operation, comprising:
transmitting a request to execute a first NFC operation on at least a first data store, wherein the first NFC operation comprises creating a full copy of a file that is stored in the first data store;
after transmitting the request to execute the first NFC operation, determining that the first NFC operation should be stopped; and
based on determining that the first NFC operation should be stopped:
transmitting a request to stop the first NFC operation,
selecting a second data store, and
transmitting a request to execute a second NFC operation on at least the second data store, wherein the second NFC operation comprises creating a copy of at least a portion of the file.

2. The method of claim 1, wherein
the first NFC operation comprises storing the full copy of the file in the first data store, and
the second NFC operation comprises storing the copy of the portion of the file in the second data store.

3. The method of claim 1, wherein
the first NFC operation comprises storing the full copy of the file in a third data store,
the second NFC operation comprises storing the copy of the portion of the file in the third data store, and
the copy of the portion of the file is created from another full copy of the file that is stored in the second data store.

4. The method of claim 1, wherein
the first NFC operation comprises storing the full copy of the file in a third data store, and
the second NFC operation comprises storing the copy of the portion of the file in the second data store.

5. The method of any one of the claims 1 to 4, wherein
the requests to execute the first and second NFC operations, are each transmitted to a first computing device, the first computing device being connected to both the first and second data stores.

6. The method of any one of the claims 1 to 5, wherein
the requests to execute the first and second NFC operations, are each transmitted to both first and second computing devices, the first computing device being connected to the first data store, and the second computing device being connected to the second data store.

7. The method of claim 6, wherein
the first computing device is managed by a first virtualization management software, and the second computing device is managed by a second virtualization management software.

8. The method of claim 7, wherein
the requests to execute the first and second NFC operations, are each transmitted to the second virtualization management software to be further transmitted to the second computing device.

9. The method of any one of the claims 1 to 8, further comprising:
after determining that the first NFC operation should be stopped, receiving a message indicating an offset of the file up to which the first NFC operation was completed, wherein the at least a portion of the file is the remainder of the file for which the first NFC operation was not completed.

10. The method of any one of the claims 1 to 9, wherein
the copy of the portion of the file is created from a replicated copy of the file, and
the replicated copy of the file is stored in the second data store.

11. A non-transitory computer-readable medium comprising instructions that are executable in a computer system, wherein the instructions when executed cause the computer system to carry out a method of managing a network file copy (NFC) operation, the method comprising:
transmitting a request to execute a first NFC operation on at least a first data store, wherein the first NFC operation comprises creating a full copy of a file that is stored in the first data store;
after transmitting the request to execute the first NFC operation, determining that the first NFC operation should be stopped; and
based on determining that the first NFC operation should be stopped:
transmitting a request to stop the first NFC operation,
selecting a second data store, and
transmitting a request to execute a second NFC operation on at least the second data store, wherein the second NFC operation comprises creating a copy of at least a portion of the file:
wherein in particular
(A) the first NFC operation comprises storing the full copy of the file in the first data store, and the second NFC operation comprises storing the copy of the portion of the file in the second data store; or
wherein in particular
(B) the first NFC operation comprises storing the full copy of the file in a third data store,
the second NFC operation comprises storing the copy of the portion of the file in the third data store, and
the copy of the portion of the file is created from another full copy of the file that is stored in the second data store; or
wherein in particular
(C) the first NFC operation comprises storing the full copy of the file in a third data store, and the second NFC operation comprises storing the copy of the portion of the file in the second data store.

12. A computer system comprising:
a plurality of data stores including a first data store and a second data store; and
a plurality of computing devices, wherein first virtualization management software executing on the plurality of computing devices is configured to:
transmit a request to at least one of the plurality of computing devices, to execute a first NFC operation on at least the first data store, wherein the first NFC operation comprises creating a full copy of a file that is stored in the first data store;
after transmitting the request to execute the first NFC operation, determine that the first NFC operation should be stopped; and
based on determining that the first NFC operation should be stopped:
transmit a request to the at least one of the plurality of computing devices, to stop the first NFC operation,
select the second data store, and
transmit a request to the at least one of the plurality of computing devices, to execute a second NFC operation on at least the second data store, wherein the second NFC operation comprises creating a copy of at least a portion of the file.

13. The computer system of claim 12, wherein
the first virtualization management software transmits each of the requests to execute the first and second NFC operations, to a first computing device of the plurality of computing devices, the first computing device being connected to both the first and second data stores.

14. The computer system of claim 12, wherein
the first virtualization management software transmits each of the requests to execute the first and second NFC operations, to both first and second computing devices of the plurality of computing devices, the first computing device being connected to the first data store, and the second computing device being connected to the second data store;
wherein in particular
(A) the first virtualization management software is configured to manage the first computing device, and
a second virtualization management software is configured to manage the second computing device;
wherein further in particular
(B) the first virtualization management software transmits each of the requests to execute the first and second NFC operations, to the second virtualization management software, and the second virtualization management software transmits each of the requests to execute the first and second NFC operations, to the second computing device.

15. The computer system of any one of the claims 12 to 14, wherein
(A) the first virtualization management software is further configured to:
after determining that the first NFC operation should be stopped, receive a message from the at least one of the plurality of computing devices, wherein the message indicates an offset of the file up to which the at least one of the plurality of computing devices completed the first NFC operation, and the at least a portion of the file is the remainder of the file for which the first NFC operation was not completed;
and/or wherein
(B) the first virtualization management software creates the copy of the portion of the file from a replicated copy of the file, and
the replicated copy of the file is stored in the second data store.
